# EUROPÄISCHE PATENTANMELDUNG

(11) **EP 1 681 755 A2**
(43) Veröffentlichungstag der Anmeldung: **19.07.2006**
(21) Anmeldenummer: 06000716.8
(22) Anmeldetag: 13.01.2006
(51) Int. Cl.: H02H 9/00

(54) **Verfahren zum Betreiben eines elektrischen Verbrauchers**

(30) Priorität: 18.01.2005 DE 102005002381
(71) Anmelder: Beru AG, 71636 Ludwigsburg (DE)
(72) Erfinder: Etzkorn, Hans-Peter, 76646 Bruchsal (DE); Paul, Jürgen, 76297 Stutensee-Büchig (DE); Merte, Rolf, 69168 Wiesloch (DE)
(74) Vertreter: Pohlmann, Eckart

(57) **Zusammenfassung**

Verfahren zum Betreiben eines Verbrauchers, bei dem ein im Vergleich zum Nennstrom sehr hoher Einschaltstrom auftritt, z.B. einer analog betriebenen PTC-Heizvorrichtung für eine bewegliche Einrichtung, beispielsweise ein Fahrzeug. Die Leistung am Verbraucher wird in der Anschaltphase definiert begrenzt oder rampenförmig hochgefahren.

## Beschreibung

Die Erfindung betrifft ein Verfahren zum Betreiben eines elektrischen Verbrauchers, bei dem ein im Vergleich zum Nennstrom sehr hoher Einschaltstrom auftritt, insbesondere einer analog betriebenen PTC-Heizvorrichtung, einer elektrischen Pumpe, eines Elektromotors, einer Magnetspule oder dgl. für eine bewegliche Einrichtung, insbesondere ein Kraftfahrzeug.

Es ist bekannt, bewegliche Einrichtungen, wie Schiffe, Schienenfahrzeuge, Lastkraftwagen, Nutzfahrzeuge, Flugzeuge, Raumschiffe und Kraftfahrzeuge mit derartigen Verbrauchern, insbesondere aber mit Heizvorrichtungen auszurüsten, die ein durchströmendes Medium, beispielsweise Luft erwärmen. Dabei kann es sich um eine Fahrzeuginnenraumbeheizung, eine Luftheizung zur Scheibenenteisung, eine Heizung zum Vorwärmen der Motoransaugluft, usw., handeln.

Es ist bekannt, zu diesem Zweck Heizvorrichtungen in Form von Heizelementen digital über Mikroprozessorsteuerungen oder ohne elektronische Steuerung, beispielsweise auf der Basis von Materialien mit positivem Temperaturkoeffizienten ihres Widerstandes (PTC) oder anderer Heizelemente, beispielsweise aus Metall vorzusehen, die analog dadurch betrieben werden, dass sie über mechanische Relais ein- und ausgeschaltet werden. Es können Heizelemente in mehreren Stufen vorgesehen sein, die über eine entsprechende Anzahl von Relais zugeschaltet werden.

Bei analog betriebenen PTC-Heizvorrichtungen ist es als nachteilig anzusehen, dass beim Einschalten, d.h., in einer Anschaltphase, deren Dauer in der Größenordnung von einigen Sekunden liegt, ein sehr hoher Anlaufstrom fließt, der gleich dem doppelten Nennstrom sein kann, so dass die Strombelastung für das Versorgungsnetz außerordentlich hoch ist.

Nachteilig ist weiterhin, dass es keine Fehlerdiagnosemöglichkeit gibt, dass das Schalten in Stufen, d.h. unstetig erfolgt, dass für das Schalten ein mechanischer Prozess unter Verwendung von mechanischen Relais vorgesehen ist, die Schaltgeräusche verursachen, dass auf Grund der Schaltzyklen die Lebensdauer begrenzt ist und dass der Betrieb mit hohen Kosten verbunden ist, da mechanische Relais teuer sind und einen hohen Verkabelungsaufwand haben.

Heizungen ohne elektronische Steuerung, d.h. analog betriebene Heizvorrichtungen der oben beschriebenen Art sind auf dem Markt von zahlreichen verschiedenen Anbietern erhältlich.

Die der Erfindung zugrunde liegende Aufgabe besteht demgegenüber darin, ein Verfahren der eingangs genannten Art anzugeben, das analog, d.h. nicht über Mikroprozessoren gesteuert oder geregelt arbeitet und bei dem die Strombelastung in der oben definierten Anschaltphase erheblich reduziert ist.

Diese Aufgabe wird gemäß der Erfindung durch das im Anspruch 1 angegebene Verfahren gelöst.

Besonders bevorzugte Ausgestaltungen und Weiterbildungen des erfindungsgemäßen Verfahrens sind Gegenstand der Ansprüche 2 bis 7.

Da bei dem erfindungsgemäßen Verfahren die Leistung zeitlich verzögert in der Anschaltphase hochgefahren wird, wird ein hoher Stromstoß in der Anschaltphase vermieden und dadurch die Belastung des Versorgungsnetzes reduziert.

Das erfindungsgemäße Verfahren hat den weiteren Vorteil, dass eine bedingte Fehlerdiagnose und ein Unter- und Überspannungsschutz realisierbar sind und im Vergleich zu bekannten Verfahren zum Betreiben einer mehrstufigen Heizvorrichtung, bei denen einzelne Heizstränge zeitlich nacheinander zugeschaltet werden, eine homogene Temperaturverteilung in der Heizvorrichtung erreichbar ist, da alle Heizstränge gleichmäßig angesteuert werden.

Dadurch, dass keine mechanischen Relais für den Betrieb der Heizvorrichtung gemäß der Erfindung vorgesehen sind, sind keine Schaltgeräusche vorhanden, ist die Lebensdauer verlängert, da mechanische Komponenten fehlen, ergibt sich ein deutlich verringerter Verkabelungsaufwand und sind die Kosten reduziert.

Im Folgenden werden anhand der zugehörigen Zeichnung besonders bevorzugte Ausführungsbeispiele des erfindungsgemäßen Verfahrens näher beschrieben. Es zeigen
Fig. 1 in einem Zeitdiagramm für eine Stufe den Anstieg des Stromes bei einem herkömmlichen Verfahren zum Betreiben einer analog betrieben PTC-Heizvorrichtung sowie bei dem erfindungsgemäßen Verfahren,
Fig. 2 in einem Blockschaltbild den Aufbau einer ein- oder mehrstufigen elektronischen Steuerschaltung für eine PTC-Heizvorrichtung,
Fig. 3 in einem Blockschaltbild den Aufbau einer stufenlosen elektronischen Steuerschaltung für eine PTC-Heizvorrichtung,
Fig. 4 ein erstes Ausführungsbeispiel einer Schaltungsanordnung zum Erzeugung einer PWM-Steuerspannung für die in Fig. 2 dargestellte elektronische Schaltung und
Fig. 5 ein zweites Ausführungsbeispiel einer Schaltungsanordnung zum Erzeugen einer PWM-Steuerspannung für die in Fig. 2 dargestellte elektronische Schaltung.

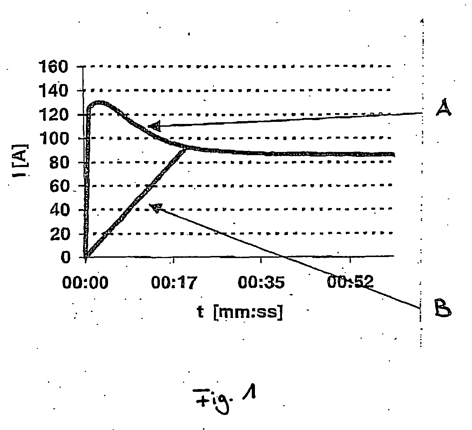

Wie es in Fig. 1 dargestellt ist, wird bei einem herkömmlichen Verfahren zum Betreiben einer analog betriebenen PTC-Heizvorrichtung über ein mechanisches Relais mit entsprechender Relaissteuerung die Heizung in der Anschaltphase angeschaltet, derart, dass der Strom in den ersten Sekunden steil ansteigt. Dabei kann der doppelte Nennstrom fließen, was für das Versorgungsnetz sehr belastend ist. Diese Situation ist in der Zeichnung mit der Kurve A dargestellt.

Bei dem erfindungsgemäßen Verfahren wird schaltungstechnisch eine zeitliche Leistungsverzögerung realisiert, derart, dass die Leistung der Heizvorrichtung in der Anschaltphase zeitlich verzögert bzw. definiert begrenzt hochgefahren wird. Das kann stufenförmig oder rampenförmig und stetig erfolgen und beispielsweise bei einem Betrieb der Heizvorrichtung mit Pulsweitenmodulation (PWM) durch eine zeitlich verzögerte definierte Steigerung des Pulsweitenmodulationsverhältnisses erreicht werden. Der Anstieg kann z.B. durch ein integriertes RC-Glied gesteuert werden.

Wie es in Fig. 1 dargestellt ist, kann beispielsweise eine definierte Zeitkonstante von T = 20s schaltungstechnisch so vorgesehen werden, dass die Heizvorrichtung erst nach dieser Zeit T im Nennbetrieb arbeitet. Diese Situation ist in der zugehörigen Zeichnung mit der Kurve B wiedergegeben. Die Zeitkonstante kann bis zu 30s betragen.

Für die beim erfindungsgemäßen Verfahren vorgesehene zeitlich verzögerte oder definiert begrenzte Steigerung der Leistung werden elektronische Schalter verwendet. Es besteht weiterhin die Möglichkeit der Fehlerdiagnose und die Möglichkeit einer Plausiblitätsprüfung des PWM-Signals.

Es kann weiterhin ein Unter- oder Überspannungsschutz vorgesehen sein und es ist eine Temperaturüberwachung mit Begrenzung der maximalen Temperatur und Abschaltung bei Erreichen dieser Temperatur möglich, um beispielsweise bei einer Heizvorrichtung für eine Klimaanlage eine Schädigung für den Fall, dass die Ventilation nicht arbeitet, zu vermeiden. Auch bei Heizvorrichtungen für Heizflansche zum Vorheizen der angesaugten Luft eines Kraftfahrzeugmotors können zu hohe Gehäuseflanschtemperaturen vermieden werden.

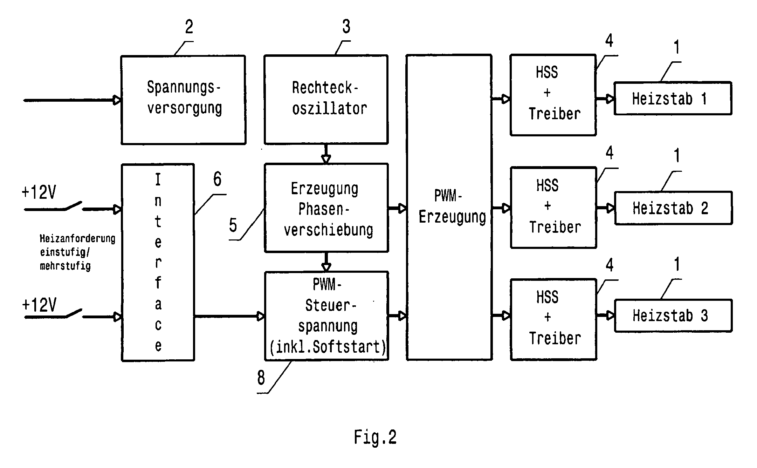

Die in einem Blockschaltbild in Fig. 2 dargstellte ein- oder mehrstufige elektronische Steuerschaltung zum Betreiben einer PTC-Heizvorrichtung, die bei dem dargestellten Ausführungsbeispiel aus drei PTC-Heizstäben 1 besteht, umfasst eine Spannungsversorgung 2, die aus einem integrierten einstellbaren Spannungsregler bestehen kann, der auf dem Markt erhältlich ist.

Ein Rechteckoszillator oder Taktoszillator 3 erzeugt ein Rechteckssignal, das zur Ansteuerung der Heizstufen über die Schalter und Treiber 4 dient. Es werden drei um jeweils 120° phasenverschobene Ansteuersignale gebildet, um die Belastung des Spannungsnetzes zu reduzieren, indem diese Leistungsschalter 4 jeweils 120° phasenverschoben getaktet werden.

Bei dem Rechteck- oder Taktoszillator 3 kann es sich um einen analogen Taktgenerator oder einen digitalen Taktgenerator handeln.

Die Phasenverschiebung wird in einem Block 5 erzeugt, der phasenverschobene Ansteuersignale erzeugt, die der Verringerung der Impulsbelastung des Spannungsnetzes beim Betrieb der Heizung dienen.

Die Phasenverschiebung kann digital erfolgen.

Je nach Ausführungsvariante wird die Heizanforderung an der Schnittstelle 6 an die Elektronik über ein Eindraht- oder ein Zweitdrahtinterface übertragen. Die Ansteuerung erfolgt hochaktiv mit beispielsweise 12V, wobei eine niedrigaktive Ansteuerung, d.h., ein Schalten an Masse als Heizsignal gleichfalls möglich ist.

Die Ansteuerung erfolgt entweder bei nur einer Heizleistungsstufe über eine Leitung oder bei mehreren Heizstufen über zwei Leitungen, wie es in Fig. 2 dargstellt ist.

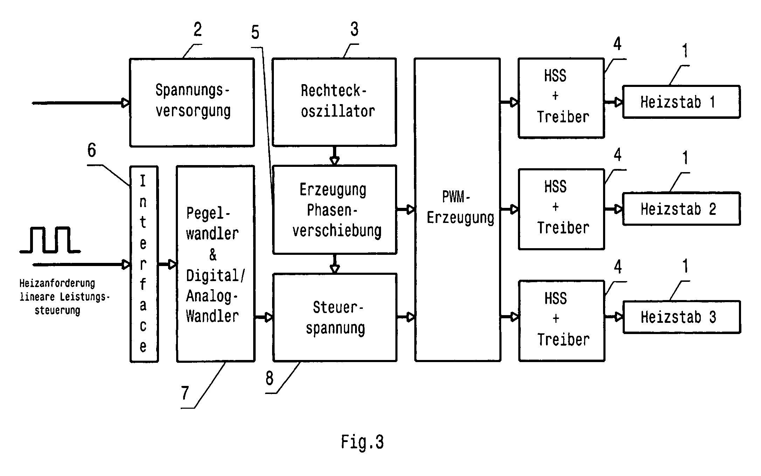

Fig. 3 zeigt ein Ausführungsbeispiel, das sich von dem in Fig. 2 dargestellten Ausführungsbeispiel der elektronischen Schaltung dadurch unterscheidet, dass eine von außen vorgegebene PWM eine kontinuierliche Leistungsveränderung ermöglicht. Die von außen vorgegebene PWM wird mittels eines Analog-Digital-Wandlers 7 aufintegriert. Die so erzeugte Analogspannung dient dann als Vorgabewert für die Taktung der Leistungsendstufen für die Heizstäbe 1. Das bedeutet, dass entsprechend der vorgegebenen PWM die Einschaltzeiten der Heizstufen variiert werden.

Wie es in Fig. 3 dargestellt ist, ist hierbei eine Heizanforderung in Form eines PWM-Signals mit linearer Leistungssteuerung vorgesehen.

Zur Erzeugung der PWM zum Ansteuern der Schalter und Treiber 4 werden im Block 8 zunächst die um jeweils 120° phasenverschobenen Digitalsignale modifiziert. Das geschieht mit Hilfe von RC-Tiefpässen, die eine zeitliche Aufweitung der Anstiegsflanken des Taktsignals bewirken. Durch einen Vergleich der Spannungspegel der RC-Glieder am invertierenden der Operationsverstärker mit dem am nicht invertierenden Eingang anliegenden Potenzial ergibt sich ein pulsweitenmoduliertes Ausgangssignal.

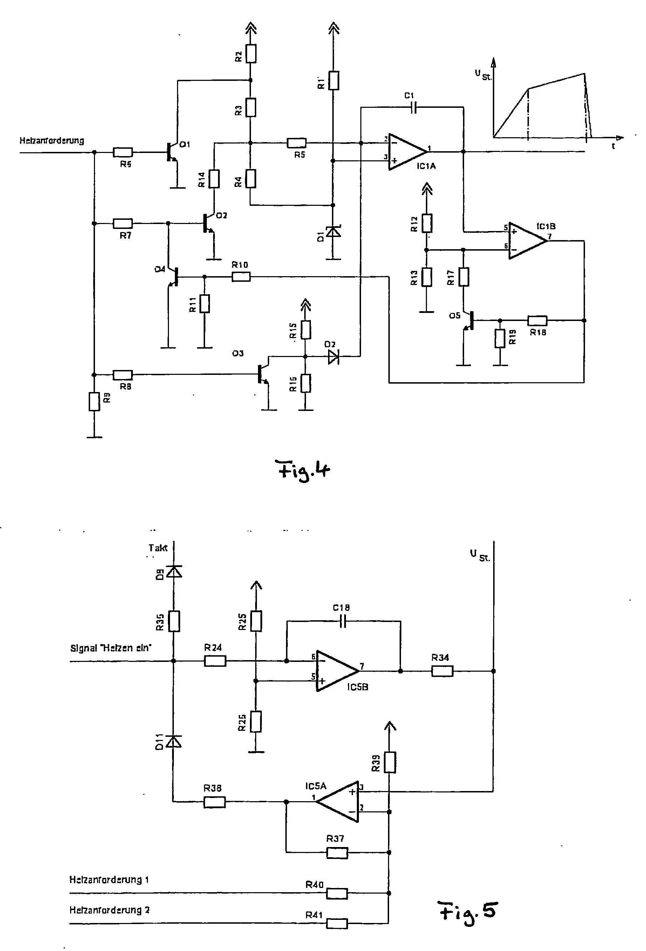

Fig. 4 zeigt den Schaltungsaufbau eines ersten Ausführungsbeispiels einer Schaltung zum Erzeugen der PWM-Steuerspannung für den Heizungsanlauf, d.h., für die Anschaltphase der Heizvorrichtung.

Die PWM-Steuerspannung dient dazu, das Tastverhältnis der PWM in der Anlaufphase des Heizvorgangs sukzessive zu erhöhen. Um einen rampenförmigen Verlauf der PWM-Steuerspannung zu erzeugen, ist gemäß Fig. 4 ein Umkehrintegrator vorgesehen. Die Steilheit des Anstiegs wird in zwei Stufen verändert. Im ersten Teil erfolgt ein relativ schneller Anstieg, um die PTC-Heizvorrichtung möglichst schnell aufzuheizen. Durch einen raschen Temperaturanstieg der Heizstäbe 1 werden die Schalter 4 nur für kurze Zeit im Bereich der maximalen Stromaufnahme der Heizvorrichtung betrieben. Darauf ergibt sich eine verminderte Erwärmung der Schalter 4.

Wie es in Fig. 4 dargestellt ist, wird das durch die Vorgabe einer zu integrierenden Spannung am Widerstand R4 bei Anlegen des Signals "Heizanforderung" realisiert. Im zweiten Teil wird durch einen Vergleich der Steuerspannung U_{St} am Ausgang des IC1A mit einem frei definierbaren Referenzpotenzial die zu integrierende Spannung verringert, was ein langsames Ansteigen der Steuerspannung U_{St} zur Folge hat. Beim Abschalten wird der Kondensator C1 des Integrators über die Spannung des Teilers aus den Widerständen R15 und R16 schnell aufgeladen. Das beeinflusst die Steilheit der Spannungskurve während des Abschaltens.

Bei einem nicht dargestellten Ausführungsbeispiel kann der langsame Anstieg der Steuerspannung U_{St} auch durch den Einsatz eines digitalen Zählers in Verbindung mit einer digitalen Analogumsetzung bewirkt werden.

Das in Fig. 5 dargestellte Ausführungsbeispiel entspricht einem getakteten Umkehrintegrator und arbeitet nach einem ähnlichen Prinzip wie das in Fig. 4 dargestellte Ausführungsbeispiel. Allerdings wird hier an einem IC5B ein durch die Phasenverschiebungslogik erzeugtes Signal mit kleinem Tastverhältnis integriert, wodurch sich im Gegensatz zu der Ausbildung von Fig. 4 die geforderte Anlaufzeitkonstante von ca. 30 Sekunden ohne kostspielige Spezialbauteile realisieren lässt. Der IC5A überwacht den Pegel der PWM-Steuerspannung U_{St} und begrenzt diesen je nach Anliegen der Heizanforderungen. Die Begrenzungspegel der Steuerspannung werden durch die Spannungsteile R39 und R40 bzw. R39 und R41 festgelegt.

Obwohl das erfindungsgemäße Verfahren in Obigen anhand eines Ausführungsbeispiel einer PTC-Heizvorrichtung beschrieben wurde, versteht es sich, dass es auch bei anderen Verbrauchern, bei denen ein im Vergleich zum Nennstrom sehr hoher Anschaltstrom auftritt, insbesondere bei elektrischen Pumpen, Elektromotoren, Magnetspulen oder dgl. anwendbar ist.

## Patentansprüche

1. Verfahren zum Betreiben eines elektrischen Verbrauchers, bei dem ein im Vergleich zum Nennstrom sehr hoher Einschaltstrom auftritt, insbesondere einer analog betriebenen PTC-Heizvorrichtung, einer elektrischen Pumpe, eines Elektromotors, einer Magnetspule oder dgl. für eine bewegliche Einrichtung, insbesondere ein Kraftfahrzeug, **dadurch gekennzeichnet, dass** die Leistung des Verbrauchers in einer Anschaltphase, deren Dauer in der Größenordnung von einigen Sekunden liegt, definiert begrenzt hochgefahren wird.

2. Verfahren nach Anspruch 1, **dadurch gekennzeichnet, dass** die Leistung des Verbrauchers nach dem Anschalten über bis zu 30 Sekunden definiert begrenzt hochgefahren wird.

3. Verfahren nach Anspruch 1, **dadurch gekennzeichnet, dass** die Leistung stufenförmig hochgefahren wird.

4. Verfahren nach Anspruch 1, **dadurch gekennzeichnet, dass** die Leistung stetig rampenförmig hochgefahren wird.

5. Verfahren nach Anspruch 1, **dadurch gekennzeichnet, dass** der Verbraucher mit Pulsweitenmodulation betrieben wird und das Pulsweitenmodulationsverhältnis zeitlich verzögert erhöht wird.

6. Verfahren nach einem der vorhergehenden Ansprüche, **dadurch gekennzeichnet, dass** bei einer Heizvorrichtung die Temperatur überwacht und der Betrieb bei Erreichen einer vorgegebenen Maximaltemperatur abgeschaltet wird.

7. Verfahren nach Anspruch 5, **dadurch gekennzeichnet, dass** eine Fehlerdiagnose und/oder eine Plausiblitätsprüfung anhand des Pulsweitenmodulationssignals erfolgt/erfolgen.
